# EUROPEAN PATENT SPECIFICATION

(11) **EP 1 963 448 B1**
(45) Date of publication and mention of the grant of the patent: **10.10.2018**
(21) Application number: 06840397.1
(22) Date of filing: 21.12.2006
(51) Int. Cl.: C09D 163/00, C09D 133/08, G02B 1/04, C09D 133/00, C09D 133/10, G02B 1/10, C09D 133/06, C09D 163/02, C09D 4/00

(54) **COATINGS FOR OPTICAL ELEMENTS**
BESCHICHTUNGEN FÜR OPTISCHE ELEMENTE
REVETEMENTS POUR ELEMENTS OPTIQUES

(30) Priority: 21.12.2005 AU 2005907161
(43) Date of publication of application: 03.09.2008
(73) Proprietor: Carl Zeiss Vision Australia Holdings Ltd., Lonsdale, SA 5160 (AU)
(72) Inventor: DIGGINS, David, Robert, Flagstaff Hill, South Australia 5159 (AU)
(74) Representative: Jenkins, Peter David
(86) International application number: PCT/AU2006/001986
(87) International publication number: WO 2007/070976

(56) References cited:
- EP-A1- 1 899 423
- WO-A1-01/21375
- WO-A1-98/39390
- WO-A1-99/38924
- WO-A1-2004/033532
- WO-A2-01/18128
- US-A- 4 774 035
- US-A1- 2003 118 833
- US-A1- 2004 122 122
- US-A1- 2005 004 246

## Description

This application claims priority from Australian Provisional Patent Application No. 2005907161 filed on 21 December 2005.

### Field of the Invention

The present invention relates to compositions for use in forming coatings on optical elements, to coated optical elements, and to methods of coating optical elements.

### Background of the Invention

Optical elements, including ophthalmic lenses, sunglass lenses and other optical lenses, are commonly manufactured from plastic materials having good optical properties. However, plastic optical elements frequently lack optimal physical properties. As a consequence, it is common practice to coat plastic optical elements with coatings to improve one or more of the physical properties of the optical element.
To coat an optical element with an organic coating, a polymerisable coating composition is typically coated onto outer surfaces of the optical element and the composition is then cured to form the coating. Alternatively, optical elements can be coated using an in-mould coating process that involves coating an inner mould surface with a polymerisable coating composition prior to casting or moulding an optical element.
One common type of coating is an abrasion resistant or "hard" coat that is more resistant to abrasion than the plastic material from which the optical element is formed. We have previously developed an abrasion resistant coating composition that is particularly useful for coating thermoplastic optical elements.

The coating composition contains a relatively rigid multifunctional monomer and a relatively flexible difunctional monomer which are capable of co-reacting to form an abrasion resistant coating on the optical element. An advantage of this coating over the prior art at the time was its ability to be UV cured and to have excellent abrasion resistance and coatability with anti-reflection (AR) coatings. Common thermoplastic materials that are used in the manufacture of optical elements, such as the polycarbonate of bisphenol A or a polyamide, can be coated with this abrasion resistant coating composition. However, we have found adhesion of this composition to thermoset materials, such as CR-39™, Finalite™ (a registered trademark of Sola International Inc.), Spectralite™ (a registered trademark of Sola International Inc.), and high index polythiourethane systems is not optimal.

WO-A-01/18128 discloses a coating composition based upon at least partially hydrolyzed epoxy-functional alkoxy silanes and having particular utility in forming tintable, abrasion resistant coatings on lenses. WO-A-98/39390 discloses a coating composition for forming a transparent, abrasion-resistant coating upon eyeglass lenses or other transparent substrates, the composition comprising a binder component and a curing agent component and being substantially free of volatiles. The binder component comprises the hydrolysis product of an epoxy-functional alkoxy silane, a polyglycidyl ether, and an acrylic monomer having an acrylic functionality of not more than two. The curing agent component comprises a cationic photoinitiator and a free radical photoinitiator.

The present invention aims to provide a method of coating an optical element and a coating composition that is UV curable and can be used for forming abrasion resistant coatings on optical elements manufactured from both thermoset and thermoplastic materials.

A reference herein to a patent document or other matter which is given as prior art is not to be taken as an admission that that document or matter was known or that the information it contains was part of the common general knowledge.

### Summary of the Invention

The present invention in a first aspect provides an abrasion resistant coating composition for an optical element according to claim 1. Preferred features are defined in independent claims 2 to 10.

The present invention in a second aspect also provides an optical element having an abrasion resistant coating on a surface thereof, the abrasion resistant coating having been formed by polymerising an abrasion resistant coating composition according to the first aspect of the present invention.
The present invention in a third aspect further provides a method of forming an abrasion resistant coating on a surface of an optical element, the method including:
- providing an optical element having a surface to be coated;
- coating a surface of the optical element with a coating composition according to the first aspect of the present invention; and
- ionically polymerising the coating composition to form the abrasion resistant coating on the surface of the optical element.

The present invention in a fourth aspect also provides a method of forming an abrasion resistant coating on a surface of an optical element, the method including:
- coating a surface of a mould section used to manufacture the optical element with a coating composition according to the first aspect of the present invention:
- at least partially ionically polymerising the coating composition;
- assembling a mould containing the mould section;
- filling the mould with a cross-linkable polymeric casting composition; and
- polymerising the casting composition so as to form the optical element with the abrasion resistant coating on a surface.

We have found that the use of an epoxy monomer in an abrasion resistant coating composition allows for the formation of an organic abrasion resistant coating on both thermoset and thermoplastic materials. Prior to the development of the present invention there had been difficulties in forming UV curable abrasion resistant coatings having a desired level of abrasion resistance on thermoset optical elements. In general, coatings that have been applied to thermoset materials in the past have been thermally cured. The few UV cured coatings that have been applied to thermoset materials have been found to have very poor abrasion resistance.

We have found that an organic abrasion resistant coating can be formed on thermoset optical elements by including a polymerisable epoxy monomer in the coating composition. We have found that epoxy monomers can assist with adhesion of the coating to the optical element without significantly affecting the abrasion resistance of the coating. Therefore, we are able to form hard coats that have levels of abrasion resistance that are comparable to traditional polyacrylate hard coats.

The optical element may be a lens such as an ophthalmic lens, a camera lens, an instrument lens, or any other optically transparent material such as a domestic, commercial or residential window sheet or window, motor vehicle windscreen or window, transparent display panel and the like. In an embodiment of the invention, the optical element is an ophthalmic lens.

The optical element may be formed from any one of a variety of plastics. For example, the optical element may be formed from a thermoset or themoplastic material used for optical or ophthalmic lenses, such as CR-39™, multi-functional (meth)acrylates, polyurethanes, polythiourethanes, polythioepoxides, polythioesters, polycarbonate, episulfide polymers, and polyamide.

The coating composition may be polymerised using a UV curing step. In this embodiment, the coating composition contains a cationic initiator which may be a UV-activated cationic photoinitiator.

The coating composition also includes a hardness enhancer which is a metal oxide, such as colloidal silica. In an embodiment of the invention the hardness enhancer is (meth)acrylated or epoxylated colloidal silica.

### Detailed Description of the Invention

The present invention was developed as a result of a need for a UV curable abrasion resistant coating composition that could be coated directly onto a thermoset or thermoplastic plastic optical element and would provide a desired degree of abrasion resistance.

Coatings that can be photopolymerised, especially UV curable coatings, have significant process advantages over conventional thermally cured coatings. UV curing significantly reduces the time to process lenses and therefore reduces the time to meet a customer's requirements. Thermally cured coatings require a relatively long time to cure and therefore the coating can become contaminated with airborne particulates. The limited time required for UV curing reduces the opportunity for optical elements to be contaminated with airborne particulates. Also, thermally cured resins generally have limited shelf life and pot life.

We have previously developed a UV curable abrasion resistant coating composition containing a relatively rigid multifunctional crosslinking monomer and a relatively flexible difunctional monomer (see published International patent application WO2003/052011). An advantage of this prior art coating composition is that it can be used to form an abrasion resistant coating on plastic optical elements without the need for an intermediate or primer layer to assist with adhesion of the abrasion resistant coating to the optical element.

In practice, the prior art coating composition is particularly useful for coating thermoplastic optical elements, such as those formed from the polycarbonate of bisphenol A or a polyamide. It is thought that the presence of a solvent in the coating composition assists in adhesion of the abrasion resistant coating layer to thermoplastic substrates. However, this solvent assisted adhesion is not effective for thermoset materials.

We have discovered that a coating composition containing an epoxy monomer and another polymerisable (meth)acrylate monomer, can be used to form an abrasion resistant coating layer on thermoset materials. Without being bound by theory, we think that the epoxy groups of the epoxy monomer are able to react with free hydroxyl groups on the surface of the thermoset material to form covalent bonds to thereby assist with the adhesion of the abrasion resistant coating to the surface.

The optical element may be any optically transparent material that requires an abrasion resistant coating layer. In an embodiment of the invention, the optical element is an ophthalmic lens. The optical element can be a thermoset polymer such as a polymer of diethylene glycol bis(allyl carbonate) (e.g. CR-39™, a trade mark of PPG Industries, Inc), a polyacrylate copolymer (e.g. Spectralite™, a trade mark of Sola International Inc.), a thiolene polymer (e.g. Finalite™, a trade mark of Sola International Inc.), a urethane polymer (e.g. Trivex™, a trade mark of PPG), a thiourethane polymer (e.g. high index MR series of materials from Mitsui Chemicals) or a thioepoxy polymer (e.g a high index resin from Mitsubishi Gas). Whilst the coating composition of the present invention may be particularly suited to forming an abrasion resistant coating on thermoset materials, we have found that it can also be used on thermoplastic materials and, therefore, the optical element could alternatively be a thermoplastic material such as the polycarbonate polymer of bisphenol A or a polyamide.

The abrasion resistance of a coating layer can be measured using standard ophthalmic industry tests. We have found that the levels of Bayer abrasion resistance that can be achieved with the coating of the present invention are good. Furthermore, the levels of steel wool abrasion resistance that can be achieved are excellent. In this context, we use a star rating to rank abrasion resistance. This star rating is based on a ratio of haze developed for an uncoated CR-39™ lens to that developed for a sample under evaluation when subjected to an abrasion test. The star rating based on haze ratios is as specified below.

**Steel Wool Abrasion Resistance**

| | |
|---|---|
| <0.5 | no stars |
| 0.5 ∼ 1.0 | ★ |
| 1.0 ∼ 1.5 | ★★ |
| 1.5 ∼ 2.5 | ★★★ |
| 2.5 ∼ 10 | ★★★★ |
| >10 | ★★★★★ |

**Bayer Abrasion Resistance**

| | |
|---|---|
| <0.5 | no stars |
| 0.5 ∼ 1.0 | ★ |
| 1.0 ∼ 1.5 | ★★ |
| 1.5 ∼ 2.5 | ★ ★★ |
| 2.5 ∼ 5 | ★★★★ |
| >5 | ★★★★★ |

An abrasion resistant coating is considered to be good if, using the standard ophthalmic industry tests, it has a rating of 3 stars, very good if it has a rating of 4 stars and excellent if it has a rating of 5 stars in the standard steel wool or Bayer abrasion tests. For comparative purposes, uncoated CR-39™ has a Bayer abrasion resistance and steel wool abrasion resistance rating of 2 stars. Uncoated polycarbonate has a Bayer abrasion resistance and steel wool abrasion resistance rating of 0 stars.

The present invention provides a method of forming an abrasion resistant coating on an optical element. The method includes a step of coating the optical element with a coating composition. This may involve applying the coating composition to a preformed optical element or it may involve applying the coating during the formation of the optical element, such as in an in-mould coating process.

Any of the techniques that are used for that purpose in the art can be used to coat the optical element, including dip coating, spin coating, flow coating, spray coating and in-mould coating. Spin coating is the preferred method of applying the coating to both thermoset and thermoplastic materials. The coating can also be applied to thermoset materials such as CR-39™, Spectralite™ or Finalite™ by in-mould coating.

Depending on the use of the optical element, all or part of any of the surface(s) of the element may be coated. For example, ophthalmic lenses have front and back surfaces that are susceptible to abrasion and therefore it may be preferred that both surfaces are coated. Alternatively, with a semifinished ophthalmic lens the front surface may need to be coated with a conventional coating and the other surface may be coated with a coating composition of the present invention after that surface has been generated to the appropriate surface power. Alternatively, a coating composition of the present invention may be applied to the front surface and the other surface may be coated with either a coating composition of the present invention or a conventional coating after that surface has been generated to the appropriate surface power. Optical lenses for use in an optical instrument may only have one lens surface exposed and therefore it may only be necessary to coat the exposed surface.

The abrasion resistant coating composition of the present invention includes a polymerisable epoxy monomer having an average of at least two epoxy groups in the monomer molecule wherein the composition is capable of forming an abrasion resistant coating on an optical element after polymerization. The coating composition also includes (meth)acrylate monomer having an average of at least two polymerisable double bonds in the molecule. The (meth)acrylate monomer is polymerisable with a cationic photoinitiator.

As a general principle, in order to achieve an abrasion resistant coating, it is ideal to use monomers that form a highly crosslinked network when polymerised. Therefore, the epoxy monomer is a polymerisable monomer having at least two epoxy groups and preferably three or more epoxy groups. As used herein, the term epoxy group refers to a group of formula

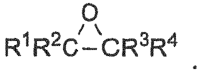

Epoxy monomers that can be used include, but are not limited to difunctional, trifunctional and other multi-functional epoxy monomers. The epoxy monomer may also contain other functional groups. For example, the epoxy monomer may be a silane having two or more epoxy groups per molecule.

Specific examples of polymerisable epoxy monomers include ethylene glycol diglycidyl ether, diethylene glycol diglycidyl ether, polyethylene glycol diglycidyl ether, propylene glycol diglycidyl ether, dipropylene glycol diglycidyl ether, tripropylene glycol diglycidyl ether, polypropylene glycol diglycidyl ether, neopentyl glycol diglycidyl ether, 1,6 hexanediol diglycidyl ether, glycerine diglycidyl ether, pentaerythritol diglycidyl ether, trimethylol propane triglycidyl ether, pentaerythritol triglycidyl ether, glycerol triglycidyl ether, diglycerol triglycidyl ether, diglycerol tetraglycidyl ether, pentaerythritol tetraglycidyl ether, dipentaerythritol tetraglycidyl ether, bisphenol-A diglycidyl ether (BPADGE), bisphenol-F diglycidyl ether, and their extended chain analogs, 1,4-butanediol diglycidyl ether, diglycidyl ethers of tetrabromo-bisphenol-A, epoxy based ethers of 4,4'-biphenylene, such as 4, 4'-diglycidyloxybiphenyl, and so on.

Specific examples of polymerisable epoxy monomers having an average of two epoxy groups in the molecule include aliphatic polyethylene glycol diglycidyl ether, polypropylene glycol diglycidyl ether, tetramethylene glycol diglycidyl ether, 1,6-hexamethylene glycol diglycidyl ether, neopenthyl glycol diglycidyl ether, glycerin diglycidyl ether; pentaerythritol diglycidyl ether, alicyclic hydrogenated bisphenol A diglycidyl ether, hydrogenated diglycidyl isophthalic acid ester, 3,4-epoxy cyclohexyl methyl-3,4-epoxy cyclohexane carboxylate, bis(3,4-epoxy cyclohexyl)adipate; diglycidyl hydantoin, diglycidyl oxyalkyl hydantoin; aromatic bisphenol A diglycidyl ether, bisphenol A diglycidyl ether initial condensate, diphenylmethane diglycidyl ether, diglycidyl terephthalic acid ester, diglycidyl isophthalic acid ester, and diglycidyl aniline.

Specific examples of polymerisable epoxy monomers having an average of three epoxy groups in the molecule include aliphatic trimethylol propane triglycidyl ether, pentaerythritol triglycidyl ether, glycerol triglycidyl ether, diglycerol triglycidyl ether, triglycidyl isocyanurate, triglycidyl cyanurate, triglycidyl hydantoin; and aromatic triglycidyl para- or meta-aminophenol.

Specific examples of polymerisable epoxy monomers having an average of four epoxy groups in the molecule include diglycerol tetraglycidyl ether, pentaerythritol tetraglycidyl ether, dipentaerythritol tetraglycidyl ether, tetraglycidyl benzyl ethane, sorbitol tetraglycidyl ether, tetraglycidyl diaminophenyl methane, and tetraglycidyl bisaminomethyl cyclohexane.

Specific examples of polymerisable epoxy monomers having an average of two to several epoxy groups include phenol novolac epoxy resin, and cresol novolac epoxy resin.

Epoxy monomers that have the highest crosslink densities when polymerised may be particularly suitable. As a general rule, the higher the crosslink density, the higher the abrasion resistance. With this criterion, low molecular weight epoxy monomers with high functionality are preferred. With the above list the trifunctional and tetrafunctional epoxy monomers are suitable. Examples of such monomers include trimethylol propane triglycidyl ether, pentaerythritol triglycidyl ether, glycerol triglycidyl ether, triglycidyl isocyanurate, triglycidyl cyanurate, triglycidyl hydantoin, pentaerythritol tetraglycidyl ether, dipentaerythritol tetraglycidyl ether, and tetraglycidyl benzyl ethane.

The above listed epoxy monomers may be used alone or combined to make epoxy mixtures for use in the compositions described herein.

The (meth)acrylate monomer having an average of at least two polymerisable double bonds in the molecule that is used with the epoxy monomer can be an acrylate and/or methacrylate. The (meth)acrylate is copolymerisable with the epoxy molecule when subjected to photoinitiation, and is of high crosslink density when polymerised. The (meth)acrylate monomer may be cationically polymerisable.

The (meth)acrylate monomer having an average of at least two polymerisable double bonds in the molecule is an organic molecule having a carbon based backbone with two or more polymerisable double bonds. Due to the variety of high crosslinking (meth)acrylate monomers commercially available, such criteria are readily satisfied with (meth)acrylate monomers. Any reference to the term (meth)acrylate in this specification is intended to include reference to acrylate and/or methacrylate. The (meth)acrylate monomer may contain three or more double bonds and a relatively rigid backbone. Most suitably rigid backbones include those that contain ring moieties such as 5, 6 and 7 membered aromatic or aliphatic cyclic or heterocyclic rings. The (meth)acrylate group may be bonded to the backbone either directly or indirectly. Additionally, other functional groups may be incorporated within a single monomer molecule.

By way of example, suitable (meth)acrylate monomers may be selected from the list consisting of pentaerythritol tetraacrylate, tris(2-hydroxyethyl)isocyanurate triacrylate, trimethylol propyl triacrylate, dipentaerythritol hexaacrylate, dipentaerythritol pentaacrylate, 2,2,4,4,6,6-hexahydro-2,2,4,4,6,6-hexakis(2-((2-methyl-1-oxo-2-propenyl)oxy)ethoxy)-1,3,5,2,4,6-triazatriphosphorine, U6HA (a hexafunctional urethane (meth)acrylate), U4HA (a tetrafunctional urethane (meth)acrylate), tricyclodecane dimethanol diacrylate and tris(2-hydroxyethyl)isocyanurate diacrylate. The (meth)acrylate monomer may be selected from one or more of the group consisting of: pentaerythritol tetraacrylate, dipentaerythritol hexaacrylate, and dipentaerythritol pentaacrylate. The (meth)acrylate monomer may also be a mixture of any two or more of the listed monomers.

The ratio of epoxy monomer to (meth)acrylate monomer in the composition can be varied depending on the desired performance of the hard coat. The amount of epoxy monomer in the composition will affect the degree of adhesion of the abrasion resistant coating to a thermoset substrate. Additionally, the ratio of epoxy monomer to (meth)acrylate
monomer can be adjusted so that the composition, and ultimately the abrasion resistant coating formed, includes additives such as hardess enhancers. The ratios of epoxy monomer to (meth)acrylate monomer that
can be used will depend on the specific monomers used and are able to be determined empirically. By way of non-limiting example, we have found that a ratio of epoxy monomer and (meth)acrylate monomer of about 2:3 (w/w) yields an abrasion resistant coating when the epoxy monomer is trimethylol propane triglycidyl ether and the (meth)acrylate
monomer is pentaerythritol tetraacrylate. The minimum amount of epoxy monomer required to achieve satisfactory adhesion is 10% w/w monomer. However, at these low levels of epoxy monomer, the ability to cure, and therefore the abrasion resistance, is compromised. Alternatively, from a theoretical perspective, satisfactory resins could be formulated at 100% w/w epoxy monomer concentrations. However, in practice, epoxy monomers of sufficient crosslink density are not readily available and therefore commercially viable resin formulations, require an amount of a high crosslinking polymerisable (meth)acrylate monomer.

The composition may also include a solvent. If a thermoplastic material is to be coated, the composition preferably contains a solvent that is sufficiently aggressive to partially dissolve the thermoplastic but not so aggressive as to cause haze. This balance in aggressiveness is most easily achieved by using a mixture of an aggressive solvent, such as a ketone solvent (eg. methyl isobutyl ketone) an ester solvent (eg ethyl acetate), or an ether solvent, and a non-aggressive solvent, such as a lower alcohol (eg. isopropyl alcohol). The term 'aggressive solvent' is intended to mean a solvent that affects the polymer network of an adjoining polymer layer or substrate, whilst the term 'non-aggressive solvent' is intended to mean a solvent to which an adjoining polymer layer or substrate is substantially inert. The use of one or more aggressive solvents in the coating composition assists adhesion of the abrasion resistant coating layer to the thermoplastic substrate, such as the polycarbonate of bisphenol A or a polyamide, as the solvent disrupts the thermoplastic polymer network at the abrasion resistant coating-substrate interface to allow the intermingling of polymer chains from the abrasion resistant coating layer and the polycarbonate substrate. In general, some of the solvent evaporates prior to polymerisation but it is also necessary to remove substantially all of the solvent from the composition prior to polymerisation. The solvent removal can be facilitated by heating or time.

In the case of a thermoset material, the choice of solvent is not critical. As mentioned previously, it is thought that adhesion is achieved by epoxy groups of the coating reacting with the hydroxyl groups or other reactive functional groups on the surface of the substrate.

The composition also includes a hardness enhancer which is a metal oxide. More specifically, the incorporation of metal oxide sols into the coating composition is beneficial for abrasion resistance. The metal oxide sol generally incorporated is colloidal silica. If high index systems are required other high refractive index metal oxides such as titanium dioxide, zirconium dioxide, antimony oxide, and so on can be utilised. In order to disperse and copolymerise these metal oxides into an organic matrix the metal oxide sols may need to be functionalised with a polymerisable functional group. The functionality facilitates dispersion of the colloidal silica and subsequent copolymerisation of the silica with the monomers present in the resin. Non-limiting examples of suitable silica include (meth)acrylated and epoxylated colloidal silica. A specific means to functionalise colloidal silica is to graft methacryloxy propyl trimethoxy silane or glycidoxy propyl trimethoxy silane onto the surface of the silica.

(Meth)acrylated or epoxylated colloidal silicas are generally dispersed in polymerisable monomers. A common dispersant monomer for commercial acrylated colloidal silica preparations is hexane diol diacrylate. In order to minimise the presence of a low crosslinking monomer in the coating composition it is preferable to use a dispersant monomer that is the high crosslinking monomer that is used in the formulation. The amount of (meth)acrylated or epoxylated colloidal silica that is present in the composition may vary between 0% and about 50% (w/w solids) however, the amount used will depend on the amount of high cross linking monomer that is present in the composition.

The colloidal silica can be made in accordance with the procedures described in United States patents 4,348,462 and 5,614,321, both of which are incorporated herein solely for the purpose of providing procedures for preparing colloidal silica. Alternatively, commercial (meth)acrylated silicas are available under the product name of FSD 100 (available from General Electric) or as the product series Highlink (available from Clariant).

The composition also contains a cationic photoinitiator. Ionic initiation is required for polymerisation of epoxy monomers. Any of the many compounds known to initiate polymerization by a cationic mechanism may be used. Compounds known to initiate polymerisation by a cationic mechanism include, for example, diaryliodonium salts, triarylsulfonium salts, diaryliodosonium salts, dialkylphenylsulfonium salts, dialkyl(hydroxydialkylphenyl)sulfonium salts and ferrocenium salts. Such salts may be modified by the attachment of alkyl, alkoxy, siloxy and the like groups. Particularly useful initiators include (4-n-decyloxyphenyl) phenyliodonium hexafluoroantimonate (IOC10), (4-n-decyloxyphenyl)diphenylsulfonium hexafluoroantimonate (SOC10) and S-methyl-S-n-dodecylphenacylsulfonium hexafluoroantimonate (DPS-C₁ C₁₂). The amount of polymerisation initiator used and the conditions of polymerisation will be readily determined by those skilled in the art, or can easily be determined empirically. Typically, the polymerisation initiator is employed in concentrations ranging from 0.01 to 10% w/w of solids.

The coating composition may also contain flow agents. Flow agents are typically based on a polydimethylsiloxane or a fluoropolymer backbone. Suitable flow agents that are based on a polydimethylsiloxane backbone can be sourced from companies such as Tego Chemie Service or Byk-Chemie. Specific suitable flow agents with a polydimethylsiloxane backbone include Byk 371 and Byk 300 from Byk-Chemie. Suitable flow agents based on a fluoropolymer backbone can be sourced from Daikin or 3M. Specific suitable flow agents with a fluoropolymer backbone include FC-431 from 3M and NS-1606 from Daikin.

The thickness of the coating can be controlled by adjusting the amount of solids in the composition and the parameters of the particular coating process that is used. For example, if the coating is applied by spin coating, the thickness of the coating will depend on the spin speed. Similarly, if the coating is applied by dip coating, the thickness will depend on the pull up speed. Preferably, the level of solids in the composition is about 50% by weight.

The coating composition may also contain other additives such as stabilisers, antioxidants, flexibilisers, reinforcing fillers, surfactants, flow agents, levelling agents, refractive index modifiers (e.g. titanium dioxide, zirconium dioxide, antimony dioxide) and antistatic agents.

The method of the present invention also includes a step of polymerising the coating composition to form the abrasion resistant coating. The composition may be cured using a UV curing step. In an embodiment of the invention, the composition is cured by UV initiated cationic polymerisation. Cationic polymerisation enables epoxy groups of the epoxy monomer to react with free hydroxyl or other functional groups on the surface of the thermoset material. The use of catonic photoinitiators also enables the polymerisation of the photocationically polymerisable (meth)acrylate monomer without oxygen inhibition.
The composition of the present invention can also be used in an in-mould coating process. In mould coating processes are known in the art - for example see published International patent application WO 01/21375, which is incorporated herein by reference solely for the purpose of exemplifying in-mould coating processes.

An in-mould coating process involves applying the coating composition to a surface of a mould section that is part of a mould used to cast the optical element. The composition is then partially cured by UV initiated cationic photopolymerisation. In order to prevent epoxy groups from reacting with the mould surface, it is necessary to prevent the silanol groups of a glass mould surface reacting with the epoxide. This is achieved by capping the silanol groups with an inert material.

Following partial polymerisation of the abrasion resistant coating composition mould pieces are fitted together to form a mould cavity that is coated with the abrasion resistant coating composition in a partially polymerised form. Thermosetting monomer is then poured into the mould and the plastic is cured in the usual way. The moulded article is finally removed from the mould to provide the coated article. This then provides an in-mould coating process for forming an optical element that has a good level of abrasion resistance.

It will be appreciated from the foregoing discussion that the coating composition is suitable for coating directly onto a surface of a pre-formed optical element. However, the optical element may contain further coating layers in addition to the abrasion resistant coating layer to form a multi-layer coating on the optical element. For example, the abrasion resistant coating layer may be coated over a second abrasion resistant coating on the surface of the optical element. Further, multi-layer coatings, such as a multi-layer coating that forms, for instance, an anti-reflection (AR) stack, may be coated over the abrasion resistant coating layer of the invention.

The present invention also provides an optical element, such as an ophthalmic lens, having an abrasion resistant coating on a surface thereof, the abrasion resistant coating having been formed by polymerising an abrasion resistant coating composition as described previously.

### Description of Embodiments of the Invention

Several examples will now be provided in order to illustrate embodiments of the present invention. However, it is to be understood that the following description is not to limit the generality of the above description.

The following composition was used in a spin coating process for lenses manufactured from a variety of plastics.

### Example 1 - Coating Composition

A coating composition having the following components was prepared as outlined below:

| Component | Weight (g) | % |
|---|---|---|
| Pentaerythritol tetraacrylate | 5.9g | 40% (w/w of monomer) |
| Trimethylol propane triglycidyl ether | 23.8g | 60% (w/w of monomer) |
| Acrylated colloidal silica | 22.6g | 15% (w/w of solids) |
| Isopropyl alcohol | 20.3g | 50% (w/w of solvent) |
| Methyl isobutyl ketone | 25.0g | 50% (w/w of solvent) |
| Triarylsulfonium hexafluorophoshonate | 2.5g | 5% (w/w of solids) |
| Byk 371 Solids content | 0.3g | 0.60% (w/w of solids) 50% (w/w) |

The acrylated colloidal silica was supplied as a concentrate in pentaerythritol tetraacrylate. On analysis the chemical breakdown of the concentrate was as follows:

| | |
|---|---|
| Silica Content | 43.0% |
| Solids content of silica | 77.3% |
| Isopropanol | 21.0% |
| Water | 1.70% |

To a 200ml beaker was added 5.9g of pentaerythritol tetraacrylate, 23.8g of trimethylol propane triglycidyl ether, 22.6g of acrylated colloidal silica, 20.3g of isopropyl alcohol, 25.0g of methyl isobutyl ketone, 0.3g of Byk 371 and 2.5g of triarylsulfonium hexafluorophoshonate. The beaker was covered with aluminium foil to prevent stray UV initiating polymerisation.

### Example 2 - Coating of Lenses

Lenses were spin coated with the coating composition of Example 1 by dispensing 3ml of resin at the centre of a lens spinning at 500 rpm. Lenses were spun for a period of 10 seconds after the dispensing of resin. This ensured a coating thickness of approximately 6µm.

Prior to curing, coated lenses were exposed to infrared heat from ceramic heaters to remove solvent. The coated lenses were then irradiated with UV light from a d-lamp from Fusion Systems with a maximum intensity of 12 Wcm⁻² (as measured in the UVA region of the spectrum), for 24 seconds, corresponding to a final dose of 1.0 Jcm⁻² (as measured in the UVA region of the spectrum).

The prepared lenses were then tested using the standard industry abrasion tests described earlier. Lens tested were those having a hard coat only, and those having a hard coat and an anti-reflection (AR) coat that was applied using standard procedures.

### Example 2.1 - CR-39 Lens

**Hard Coat Only**

| | |
|---|---|
| Primary Adhesion | Pass |
| 3 Hour Boil | Pass |
| Outdoor Weathering | Pass |
| | |
| Steel Wool | ★★★★ ∼ ★★★★★ |
| Bayer Abrasion | ★★★ |

**AR Coated over Hard Coat**

| | |
|---|---|
| Primary Adhesion | Pass |
| Salt Water Boil | Pass |
| Outdoor Weathering | Pass |
| | |
| Steel Wool | ★★★ |
| Bayer Abrasion | ★★★★ |

### Example 2.2 - Polycarbonate lens

**Hard Coat Only**

| | |
|---|---|
| Primary Adhesion | Pass |
| 3 Hour Boil | Pass |
| Outdoor Weathering | Pass |
| | |
| Steel Wool | ★★★★ ∼ ★★★★★ |
| Bayer Abrasion | ★★★ |

**AR Coated over Hard Coat**

| | |
|---|---|
| Primary Adhesion | Pass |
| Salt Water Boil | Pass |
| Outdoor Weathering | Pass |
| | |
| Steel Wool | ★★★ |
| Bayer Abrasion | ★★★★ |

### Example 2.3 - Spectralite™ (Polyacrylate)

**Hard Coat Only**

| | |
|---|---|
| Primary Adhesion | Pass |
| 3 Hour Boil | Pass |
| Outdoor Weathering | Pass |
| | |
| Steel Wool | ★★★★ ∼ ★★★★★ |
| Bayer Abrasion | ★★★ |

**AR Coated over Hard Coat (polycarbonate)**

| | |
|---|---|
| Primary Adhesion | Pass |
| Salt Water Boil | Pass |
| Outdoor Weathering | Pass |
| | |
| Steel Wool | ★★★ |
| Bayer Abrasion | ★★★★ |

### Example 2.4 - Finalite (Thiolene)

**Hard Coat Only**

| | |
|---|---|
| Primary Adhesion | Pass |
| 3 Hour Boil | Pass |
| Outdoor Weathering | Pass |
| | |
| Steel Wool | ★★★★ ∼ ★★★★★ |
| Bayer Abrasion | ★★★ |

**AR Coated over Hard Coat**

| | |
|---|---|
| Primary Adhesion | Pass |
| Salt Water Boil | Pass |
| Outdoor Weathering | Pass |
| | |
| Steel Wool | ★★★ |
| Bayer Abrasion | ★★★★ |

### Example 2.5 - MR7 (Thiourethane)

**Hard Coat Only**

| | |
|---|---|
| Primary Adhesion | Pass |
| 3 Hour Boil | Pass |
| Outdoor Weathering | Pass |
| | |
| Steel Wool | ★★★★ ∼ ★★★★★ |
| Bayer Abrasion | ★★★ |

**AR Coated over Hard Coat**

| | |
|---|---|
| Primary Adhesion | Pass |
| Salt Water Boil | Pass |
| Outdoor Weathering | Pass |
| | |
| Steel Wool | ★★★ |
| Bayer Abrasion | ★★★★ |

Finally, it will be appreciated that there may be other variations and modifications made to the embodiments described herein that are also within the scope of the present invention.

## Claims

1. An abrasion resistant coating composition for an optical element, wherein the composition is capable of forming an abrasion resistant coating on an optical element after ionic polymerisation, the composition comprising:
a polymerisable epoxy monomer having an average of at least two epoxy groups in the monomer molecule selected from the group consisting of ethylene glycol diglycidyl ether, diethylene glycol diglycidyl ether, polyethylene glycol diglycidyl ether, propylene glycol diglycidyl ether, dipropylene glycol diglycidyl ether, tripropylene glycol diglycidyl ether, polypropylene glycol diglycidyl ether, neopentyl glycol diglycidyl ether, 1,6 hexane diol diglycidyl ether, glycerine diglycidyl ether, pentaerythritol diglycidyl ether, bisphenol-A diglycidyl ether (BPADGE), bisphenol-F diglycidyl ether, and their extended chain analogs, 1,4-butanediol diglycidyl ether, diglycidyl ethers of tetrabromo-bisphenol-A, epoxy based ethers of 4,4'-biphenylene, trimethylol propane triglycidyl ether, pentaerythritol triglycidyl ether, glycerol triglycidyl ether, diglycerol triglycidyl ether, diglycerol tetraglycidyl ether, pentaerythritol tetraglycidyl ether, dipentaerythritol tetraglycidyl ether, tetramethylene glycol diglycidyl ether, 1,6-hexamethylene glycol diglycidyl ether, neopenthyl glycol diglycidyl ether, alicyclic hydrogenated bisphenol A diglycidyl ether, hydrogenated diglycidyl isophthalic acid ester, 3,4-epoxy cyclohexyl methyl-3,4-epoxy cyclohexane carboxylate, bis(3,4-epoxy cyclohexyl)adipate; diglycidyl hydantoin, diglycidyl oxyalkyl hydantoin; aromatic bisphenol A diglycidyl ether, bisphenol A diglycidyl ether initial condensate, diphenylmethane diglycidyl ether, diglycidyl terephthalic acid ester, diglycidyl isophthalic acid ester, diglycidyl aniline, triglycidyl isocyanurate, triglycidyl cyanurate, triglycidyl hydantoin; aromatic triglycidyl para- or meta-aminophenol, tetraglycidyl benzyl ethane, sorbitol tetraglycidyl ether, tetraglycidyl diaminophenyl methane, tetraglycidyl bisaminomethyl cyclohexane, phenol novolac epoxy resin, and cresol novolac epoxy resin;
a (meth)acrylate monomer, the (meth)acrylate monomer having an average of at least three polymerisable double bonds in the molecule;
a hardness enhancer, which is a colloidal metal oxide; and
a cationic photoinitiator.

2. An abrasion resistant coating composition according claim 1, wherein the epoxy monomer is selected from one or more of the group consisting of: ethylene glycol diglycidyl ether, diethylene glycol diglycidyl ether, polyethylene glycol diglycidyl ether, propylene glycol diglycidyl ether, dipropylene glycol diglycidyl ether, tripropylene glycol diglycidyl ether, polypropylene glycol diglycidyl ether, neopentyl glycol diglycidyl ether, 1,6 hexane diol diglycidyl ether, glycerine diglycidyl ether, pentaerythritol diglycidyl ether, bisphenol-A diglycidyl ether (BPADGE), bisphenol-F diglycidyl ether, and their extended chain analogs, 1,4-butanediol diglycidyl ether, diglycidyl ethers of tetrabromo-bisphenol-A, and epoxy based ethers of 4,4'-biphenylene.

3. An abrasion resistant coating composition according claim 1, wherein the epoxy monomer has an average of at least three epoxy groups per molecule and is selected from the group consisting of trimethylol propane triglycidyl ether, pentaerythritol triglycidyl ether, glycerol triglycidyl ether, diglycerol triglycidyl ether, diglycerol tetraglycidyl ether, pentaerythritol tetraglycidyl ether, dipentaerythritol tetraglycidyl ether, triglycidyl isocyanurate, triglycidyl cyanurate, triglycidyl hydantoin, aromatic triglycidyl para- or meta-aminophenol, tetraglycidyl benzyl ethane, sorbitol tetraglycidyl ether, tetraglycidyl diaminophenyl methane, and tetraglycidyl bisaminomethyl cyclohexane.

4. An abrasion resistant coating composition according to claim 3, wherein the epoxy monomer is selected from one or more of the group consisting of: trimethylol propane triglycidyl ether, pentaerythritol triglycidyl ether, glycerol triglycidyl ether, diglycerol triglycidyl ether, diglycerol tetraglycidyl ether, pentaerythritol tetraglycidyl ether, and dipentaerythritol tetraglycidyl ether.

5. An abrasion resistant coating composition according to any one of claims 1 to 4, wherein the (meth)acrylate monomer has an average of at least four polymerisable double bonds in the molecule.

6. An abrasion resistant coating composition according to claim 5, wherein the (meth)acrylate monomer is pentaerythritol tetraacrylate.

7. An abrasion resistant coating composition according to any one of claims 1 to 6, wherein the colloidal metal oxide is functionalised with a polymerisable group.

8. An abrasion resistant coating composition according to any one of claims 1 to 7, wherein the hardness enhancer is (meth)acrylated colloidal silica or epoxylated colloidal silica.

9. An abrasion resistant coating composition according to any one of claims 1 to 8, further comprising a solvent.

10. An abrasion resistant coating composition according to claim 9, wherein the solvent is a mixture of:
(a) one or more of solvents selected from the group consisting of: a ketone solvent, an ester solvent, and an ether solvent; and
(b) a lower alcohol.

11. An optical element having an abrasion resistant coating on a surface thereof, the abrasion resistant coating having been formed by polymerising an abrasion resistant coating composition according to any one of claims 1 to 10.

12. An optical element according to claim 11, wherein the optical element is formed from a thermoset polymer.

13. An optical element according to claim 12, wherein the thermoset polymer is selected from one or more of the group consisting of: a polymer of diethylene glycol bis(allyl carbonate), an acrylate polymer, a thiolene polymer, a urethane polymer, a thiourethane polymer, and a thioepoxide polymer.

14. An optical element according to claim 11, wherein the optical element is formed from a thermoplastic polymer.

15. An optical element according to claim 14, wherein the thermoplastic polymer is selected from one or more of the group consisting of: a polycarbonate polymer of bisphenol A, and a polyamide.

16. An optical element according to any one of claims 11 to 15, wherein when an uncoated diethylene glycol bis(allyl carbonate) lens and the optical element are subjected to a Bayer abrasion test, a ratio of haze developed for the uncoated lens to haze developed for the optical element is 1.0 - 1.5 or greater.

17. An optical element according to any one of claims 11 to 16, wherein when an uncoated diethylene glycol bis(allyl carbonate) lens and the optical element are subjected to a steel wool abrasion test, a ratio of haze developed for the uncoated lens to haze developed for the optical element is 1.5 - 2.5 or greater.

18. An optical element according to any one of claims 11 to 17, wherein the optical element is an ophthalmic lens.

19. An optical element according to any one of claims 11 to 18, wherein the abrasion resistant coating is formed directly on the surface of the optical element.

20. A method of forming an abrasion resistant coating on a surface of an optical element, the method including:
- providing an optical element having a surface to be coated;
- coating a surface of the optical element with a coating composition according to any one of claims 1 to 10; and
- ionically polymerising the coating composition to form the abrasion resistant coating on the surface of the optical element.

21. A method of forming an abrasion resistant coating according to claim 20, wherein the optical element is formed from a thermoset polymer.

22. A method of forming an abrasion resistant coating according to claim 21, wherein the thermoset polymer is selected from one or more of the group consisting of: a polymer of diethylene glycol bis(allyl carbonate), an acrylate polymer, a thiolene polymer, a urethane polymer, and a thiourethane polymer.

23. A method of forming an abrasion resistant coating according to claim 20, wherein the optical element is formed from a thermoplastic polymer.

24. A method of forming an abrasion resistant coating according to claim 23, wherein the thermoplastic polymer is selected from one or more of the group consisting of: a polycarbonate polymer of bisphenol A, and a polyamide.

25. A method of forming an abrasion resistant coating according to any one of claims 20 to 24, wherein the step of coating the optical element includes applying the coating composition directly on the surface of the optical element.

26. A method of forming an abrasion resistant coating according to any one of claims 20 to 25, wherein the step of polymerising the coating composition includes a step of irradiating the coating composition with UV light.

27. A method of forming an abrasion resistant coating according to claim 26, wherein the coating composition is irradiated with UV light for a period of 5 to 60 seconds at a dose greater than about 5 Jcm⁻² with a maximum intensity greater than about 0.5 Wcm^{- 2}.

28. A method of forming an abrasion resistant coating according to any one of claims 20 to 27, wherein the optical element is an ophthalmic lens.

29. A method of forming an abrasion resistant coating on a surface of an optical element, the method including:
- coating a surface of a section of a mould used to manufacture the optical element with a coating composition according to any one of claims 1 to 10;
- at least partially ionically polymerising the coating composition;
- assembling a mould containing the mould section;
- filling the mould with a cross-linkable polymeric casting composition; and
- polymerising the casting composition so as to form the optical element with the abrasion resistant coating on a surface.

## Patentansprüche

1. Abriebfeste Beschichtungszusammensetzung für ein optisches Element, wobei die Zusammensetzung zur Bildung einer abriebfesten Beschichtung auf einem optischen Element nach ionischer Polymerisation befähigt ist, wobei die Zusammensetzung Folgendes umfasst:
ein polymerisierbares Epoxidmonomer mit durchschnittlich mindestens zwei Epoxidgruppen im Monomermolekül aus der Gruppe bestehend aus Ethylenglykoldiglycidylether, Diethylenglykoldiglycidylether, Polyethylenglykoldiglycidylether, Propylenglykoldiglycidylether, Dipropylenglykoldiglycidylether, Tripropylenglykoldiglycidylether, Polypropylenglykoldiglycidylether, Neopentylglykoldiglycidylether, 1,6-Hexandioldiglycidylether, Glycerindiglycidylether, Pentaerythritoldiglycidylether, Bisphenol-A-diglycidylether (BPADGE), Bisphenol-F-diglycidylether und deren kettenverlängerten Analoga, 1,4-Butandioldiglycidylether, Diglycidylethern von Tetrabrombisphenol-A, epoxidbasierten Ethern von 4,4'-Biphenylen, Trimethylolpropantriglycidylether, Pentaerythritoltriglycidylether, Glycerintriglycidylether, Diglycerintriglycidylether, Diglycerintetraglycidylether, Pentaerythritoltetraglycidylether, Dipentaerythritoltetraglycidylether, Tetramethylenglykoldiglycidylether, 1,6-Hexamethylenglykoldiglycidylether, Neopentylglykoldiglycidylether, alicyclischem hydriertem Bisphenol-A-diglycidylether, hydriertem Diglycidylisophthalsäureester, 3,4-Epoxycyclohexylmethyl-3,4-epoxycyclohexancarboxylat, Bis(3,4-epoxycyclohexyl)adipat; Diglycidylhydantoin, Diglycidyloxyalkylhydantoin; aromatischem Bisphenol-A-diglycidylether, Bisphenol-A-diglycidylether-Anfangskondensat, Diphenylmethandiglycidylether, Diglycidylterephthalsäureester, Diglycidylisophthalsäureester, Diglycidylanilin, Triglycidylisocyanurat, Triglycidylcyanurat, Triglycidylhydantoin; aromatischem Triglycidyl-para- oder -meta-aminophenol, Tetraglycidylbenzylethan, Sorbitoltetraglycidylether, Tetraglycidyldiaminophenylmethan, Tetraglycidylbisaminomethylcyclohexan, Phenol-Novolak-Epoxidharz und Kresol-Novolak-Epoxidharz;
ein (Meth)acrylat-Monomer, wobei das (Meth)-acrylat-Monomer durchschnittlich mindestens drei polymerisierbare Doppelbindungen im Molekül aufweist;
ein Mittel zur Erhöhung der Härte, bei dem es sich um ein kolloidales Metalloxid handelt; und
einen kationischen Photoinitiator.

2. Abriebfeste Beschichtungszusammensetzung nach Anspruch 1, wobei das Epoxidmonomer aus einem oder mehreren aus der Gruppe bestehend aus Ethylenglykoldiglycidylether, Diethylenglykoldiglycidylether, Polyethylenglykoldiglycidylether, Propylenglykoldiglycidylether, Dipropylenglykoldiglycidylether, Tripropylenglykoldiglycidylether, Polypropylenglykoldiglycidylether, Neopentylglykoldiglycidylether, 1,6-Hexandioldiglycidylether, Glycerindiglycidylether, Pentaerythritoldiglycidylether, Bisphenol-A-diglycidylether (BPADGE), Bisphenol-F-diglycidylether und deren kettenverlängerten Analoga, 1,4-Butandioldiglycidylether, Diglycidylethern von Tetrabrombisphenol-A und epoxidbasierten Ethern von 4,4'-Biphenylen ausgewählt ist.

3. Abriebfeste Beschichtungszusammensetzung nach Anspruch 1, wobei das Epoxidmonomer durchschnittlich mindestens drei Epoxidgruppen pro Molekül aufweist und aus der Gruppe bestehend aus Trimethylolpropantriglycidylether, Pentaerythritoltriglycidylether, Glycerintriglycidylether, Diglycerintriglycidylether, Diglycerintetraglycidylether, Pentaerythritoltetraglycidylether, Dipentaerythritoltetraglycidylether, Triglycidylcyanurat, Triglycidylhydantoin; aromatischem Triglycidyl-para- oder -meta-aminophenol, Tetraglycidylbenzylethan, Sorbitoltetraglycidylether, Tetraglycidyldiaminophenylmethan und Tetraglycidylbisaminomethylcyclohexan ausgewählt ist.

4. Abriebfeste Beschichtungszusammensetzung nach Anspruch 3, wobei das Epoxidmonomer aus einem oder mehreren aus der Gruppe bestehend aus Trimethylolpropantriglycidylether, Pentaerythritoltriglycidylether, Glycerintriglycidylether, Diglycerintriglycidylether, Diglycerintetraglycidylether, Pentaerythritoltetraglycidylether und Dipentaerythritoltetraglycidylether ausgewählt ist.

5. Abriebfeste Beschichtungszusammensetzung nach einem der Ansprüche 1 bis 4, wobei das (Meth)-acrylat-Monomer mindestens vier polymerisierbare Doppelbindungen im Molekül aufweist.

6. Abriebfeste Beschichtungszusammensetzung nach Anspruch 5, wobei es sich bei dem (Meth) acrylat-Monomer um Pentaerythritoltetraacrylat handelt.

7. Abriebfeste Beschichtungszusammensetzung nach einem der Ansprüche 1 bis 6, wobei das kolloidale Metalloxid mit einer polymerisierbaren Gruppe funktionalisiert ist.

8. Abriebfeste Beschichtungszusammensetzung nach einem der Ansprüche 1 bis 7, wobei es sich bei dem Mittel zur Erhöhung der Härte um (meth)acryliertes kolloidales Siliciumdioxid oder epoxyliertes kolloidales Siliciumdioxid handelt.

9. Abriebfeste Beschichtungszusammensetzung nach einem der Ansprüche 1 bis 8, die ferner ein Lösungsmittel umfasst.

10. Abriebfeste Beschichtungszusammensetzung nach Anspruch 9, wobei sich bei dem Lösungsmittel um eine Mischung von
(a) einem oder mehreren Lösungsmitteln aus der Gruppe bestehend aus einem Keton-Lösungsmittel, einem Ester-Lösungsmittel und einem Ether-Lösungsmittel und
(B) einem niederen Alkohol
handelt.

11. Optisches Element mit einer abriebfesten Beschichtung auf einer Oberfläche davon, wobei die abriebfeste Beschichtung durch Polymerisation einer abriebfesten Beschichtungszusammensetzung nach einem der Ansprüche 1 bis 10 gebildet wurde.

12. Optisches Element nach Anspruch 11, wobei das optische Element aus einem duroplastischen Polymer gebildet ist.

13. Optisches Element nach Anspruch 12, wobei das duroplastische Element aus einem oder mehreren aus der Gruppe bestehend aus einem Polymer von Diethylenglykolbis(allylcarbonat), einem AcrylatPolymer, einem Thiolen-Polymer, einem Urethan-Polymer, einem Thiourethan-Polymer und einem Thioepoxid-Polymer ausgewählt ist.

14. Optisches Element nach Anspruch 11, wobei das optische Element aus einem thermoplastischen Polymer gebildet ist.

15. Optisches Element nach Anspruch 14, wobei das thermoplastische Polymer aus einem oder mehreren aus der Gruppe bestehend aus einem Polycarbonat-Polymer von Bisphenol A und einem Polyamid ausgewählt ist.

16. Optisches Element nach einem der Ansprüche 11 bis 15, wobei dann, wenn eine unbeschichtete Diethylenglykolbis(allylcarbonat)-Linse und das optische Element einem Bayer-Abrasionstest unterworfen werden, das Verhältnis der entwickelten Trübung für die unbeschichtete Linse zu der entwickelten Trübung für das optische Element 1,0-1,5 oder mehr beträgt.

17. Optisches Element nach einem der Ansprüche 11 bis 16, wobei dann, wenn eine unbeschichtete Diethylenglykolbis(allylcarbonat)-Linse und das optische Element einem Stahlwolle-Abrasionstest unterworfen werden, das Verhältnis der entwickelten Trübung für die unbeschichtete Linse zu der entwickelten Trübung für das optische Element 1,5-2,5 oder mehr beträgt.

18. Optisches Element nach einem der Ansprüche 11 bis 17, wobei es sich bei dem optischen Element um eine ophthalmische Linse handelt.

19. Optisches Element nach einem der Ansprüche 11 bis 18, bei dem die abriebfeste Beschichtung direkt auf der Oberfläche des optischen Elements gebildet ist.

20. Verfahren zur Bildung einer abriebfesten Beschichtung auf eine Oberfläche eines optischen Elements, wobei das Verfahren Folgendes umfasst:
- Bereitstellen eines optischen Elements mit einer zu beschichtenden Oberfläche;
- Beschichten einer Oberfläche des optischen Element mit einer Beschichtungszusammensetzung nach einem der Ansprüche 1 bis 10 und
- ionisches Polymerisieren der Beschichtungszusammensetzung zur Bildung der abriebfesten Beschichtung auf der Oberfläche des optischen Elements.

21. Verfahren zur Bildung einer abriebfesten Beschichtung nach Anspruch 20, wobei das optische Element aus einem duroplastischen Polymer gebildet ist.

22. Verfahren zur Bildung einer abriebfesten Beschichtung nach Anspruch 21, wobei das duroplastische Element aus einem oder mehreren aus der Gruppe bestehend aus einem Polymer von Diethylenglykolbis(allylcarbonat), einem AcrylatPolymer, einem Thiolen-Polymer, einem Urethan-Polymer und einem Thiourethan-Polymer ausgewählt ist.

23. Verfahren zur Bildung einer abriebfesten Beschichtung nach Anspruch 20, wobei das optische Element aus einem thermoplastischen Polymer gebildet ist.

24. Verfahren zur Bildung einer abriebfesten Beschichtung nach Anspruch 23, wobei das thermoplastische Polymer aus einem oder mehreren aus der Gruppe bestehend aus einem Polycarbonat-Polymer von Bisphenol A und einem Polyamid ausgewählt ist.

25. Verfahren zur Bildung einer abriebfesten Beschichtung nach einem der Ansprüche 20 bis 24, wobei der Schritt des Beschichtens des optischen Elements das direkte Aufbringen der Beschichtungszusammensetzung auf die Oberfläche des optischen Elements umfasst.

26. Verfahren zur Bildung einer abriebfesten Beschichtung nach einem der Ansprüche 20 bis 25, wobei der Schritt des Polymerisierens der Beschichtungszusammensetzung einen Schritt des Bestrahlens der Beschichtungszusammensetzung mit UV-Licht umfasst.

27. Verfahren zur Bildung einer abriebfesten Beschichtung nach Anspruch 26, wobei die Beschichtungszusammensetzung über einen Zeitraum von 5 bis 60 Sekunden meiner Dosis von mehr als etwa 5 Jcm⁻² mit einer maximalen Intensität von mehr als etwa 0,5 Wcm⁻² mit UV-Licht bestrahlt wird.

28. Verfahren zur Bildung einer abriebfesten Beschichtung nach einem der Ansprüche 20 bis 27, wobei es sich bei dem optischen Element um eine ophthalmische Linse handelt.

29. Verfahren zur Bildung einer abriebfesten Beschichtung auf einer Oberfläche eines optischen Elements, wobei das Verfahren Folgendes umfasst:
- Beschichten einer Oberfläche eines Abschnitts eine zur Herstellung des optischen Elements verwendeten Form mit einer Beschichtungszusammensetzung nach einem der Ansprüche 1 bis 10;
- zumindest teilweises ionisches Polymerisieren der Beschichtungszusammensetzung;
- Zusammenbauen einer Form, die den Formabschnitt enthält;
- Füllen der Form mit einer vernetzbaren polymeren Gießzusammensetzung und
- Polymerisieren der Giesszusammensetzung zur Bildung des optischen Elements mit der abriebfesten Beschichtung auf einer Oberfläche.

## Revendications

1. Composition de revêtement résistant à l'abrasion pour un élément optique, la composition pouvant former un revêtement résistant à l'abrasion sur un élément optique après polymérisation ionique, la composition comprenant :
un monomère époxy polymérisable ayant une moyenne d'au moins deux groupes époxy dans la molécule de monomère choisi dans le groupe constitué par l'éther diglycidylique d'éthylèneglycol, l'éther diglycidylique de diéthylèneglycol, l'éther diglycidylique de polyéthylèneglycol, l'éther diglycidylique de propylèneglycol, l'éther diglycidylique de dipropylèneglycol, l'éther diglycidylique de tripropylèneglycol, l'éther diglycidylique de polypropylèneglycol, l'éther diglycidylique de néopentylglycol, l'éther diglycidylique d'hexane-1,6-diol, l'éther diglycidylique de glycérine, l'éther diglycidylique de pentaérythritol, l'éther diglycidylique de bisphénol-A (BPADGE), l'éther diglycidylique de bisphénol-F et leurs analogues à chaîne allongée, l'éther diglycidylique de butane-1,4-diol, les éthers diglycidyliques de tétrabromobisphénol-A, les éthers de 4,4'-biphénylène à base d'époxy, l'éther triglycidylique de triméthylolpropane, l'éther triglycidylique de pentaérythritol, l'éther triglycidylique de glycérol, l'éther triglycidylique de diglycérol, l'éther tétraglycidylique de diglycérol, l'éther tétraglycidylique de pentaérythritol, l'éther tétraglycidylique de dipentaérythritol, l'éther diglycidylique de tétraméthylèneglycol, l'éther diglycidylique de 1,6-hexaméthylèneglycol, l'éther diglycidylique de néopentylglycol, l'éther diglycidylique de bisphénol A hydrogéné alicyclique, l'ester diglycidylique d'acide isophtalique hydrogéné, le 3,4-époxycyclohexanecarboxylate de 3,4-époxycyclohexylméthyle, l'adipate de bis(3,4-époxycyclohexyle) ; la diglycidylhydantoïne, une diglycidyloxyalkylhydantoïne ; un éther diglycidylique de bisphénol A aromatique, un produit de condensation initial d'éther diglycidylique de bisphénol A, l'éther diglycidylique de diphénylméthane, l'ester diglycidylique d'acide téréphtalique, l'ester diglycidylique d'acide isophtalique, la diglycidylaniline, l'isocyanurate de triglycidyle, le cyanurate de triglycidyle, la triglycidylhydantoïne ; un triglycidyl-*para*- ou *méta*-aminophénol aromatique, le tétraglycidylbenzyléthane, l'éther tétraglycidylique de sorbitol, le tétraglycidyldiaminophénylméthane, le tétraglycidylbisaminométhylcyclohexane, une résine époxy novolaque de phénol et une résine époxy novolaque de crésol ;
un monomère (méth)acrylate, le monomère (méth)acrylate ayant une moyenne d'au moins trois doubles liaisons polymérisables dans la molécule ;
un agent augmentant la dureté, qui est un oxyde métallique colloïdal ; et
un photoinitiateur cationique.

2. Composition de revêtement résistant à l'abrasion selon la revendication 1, dans laquelle le monomère époxy est choisi parmi un ou plusieurs du groupe constitué par : l'éther diglycidylique d'éthylèneglycol, l'éther diglycidylique de diéthylèneglycol, l'éther diglycidylique de polyéthylèneglycol, l'éther diglycidylique de propylèneglycol, l'éther diglycidylique de dipropylèneglycol, l'éther diglycidylique de tripropylèneglycol, l'éther diglycidylique de polypropylèneglycol, l'éther diglycidylique de néopentylglycol, l'éther diglycidylique d'hexane-1,6-diol, l'éther diglycidylique de glycérine, l'éther diglycidylique de pentaérythritol, l'éther diglycidylique de bisphénol-A (BPADGE), l'éther diglycidylique de bisphénol-F et leurs analogues à chaîne allongée, l'éther diglycidylique de butane-1,4-diol, les éthers diglycidyliques de tétrabromobisphénol-A et les éthers de 4,4'-biphénylène à base d'époxy.

3. Composition de revêtement résistant à l'abrasion selon la revendication 1, dans laquelle le monomère époxy a une moyenne d'au moins trois groupes époxy par molécule et est choisi dans le groupe constitué par l'éther triglycidylique de triméthylolpropane, l'éther triglycidylique de pentaérythritol, l'éther triglycidylique de glycérol, l'éther triglycidylique de diglycérol, l'éther tétraglycidylique de diglycérol, l'éther tétraglycidylique de pentaérythritol, l'éther tétraglycidylique de dipentaérythritol, l'isocyanurate de triglycidyle, le cyanurate de triglycidyle, la triglycidylhydantoïne, un triglycidyl-*para*- ou *méta-*aminophénol aromatique, le tétraglycidylbenzyléthane, l'éther tétraglycidylique de sorbitol, le tétraglycidyldiaminophénylméthane et le tétraglycidylbisaminométhylcyclohexane.

4. Composition de revêtement résistant à l'abrasion selon la revendication 3, dans laquelle le monomère époxy est choisi parmi un ou plusieurs du groupe constitué par : l'éther triglycidylique de triméthylolpropane, l'éther triglycidylique de pentaérythritol, l'éther triglycidylique de glycérol, l'éther triglycidylique de diglycérol, l'éther tétraglycidylique de diglycérol, l'éther tétraglycidylique de pentaérythritol et l'éther tétraglycidylique de dipentaérythritol.

5. Composition de revêtement résistant à l'abrasion selon l'une quelconque des revendications 1 à 4, dans laquelle le monomère (méth)acrylate a une moyenne d'au moins quatre doubles liaisons polymérisables dans la molécule.

6. Composition de revêtement résistant à l'abrasion selon la revendication 5, dans laquelle le monomère (méth)acrylate est le tétraacrylate de pentaérythritol.

7. Composition de revêtement résistant à l'abrasion selon l'une quelconque des revendications 1 à 6, dans laquelle l'oxyde métallique colloïdal est fonctionnalisé avec un groupe polymérisable.

8. Composition de revêtement résistant à l'abrasion selon l'une quelconque des revendications 1 à 7, dans laquelle l'agent augmentant la dureté est de la silice colloïdale (méth)acrylée ou de la silice colloïdale époxydée.

9. Composition de revêtement résistant à l'abrasion selon l'une quelconque des revendications 1 à 8, comprenant en outre un solvant.

10. Composition de revêtement résistant à l'abrasion selon la revendication 9, dans laquelle le solvant est un mélange de :
(a) un ou plusieurs des solvants choisis dans le groupe constitué par : un solvant cétone, un solvant ester et un solvant éther ; et
(b) un alcool inférieur.

11. Élément optique dont une surface porte un revêtement résistant à l'abrasion, le revêtement résistant à l'abrasion ayant été formé par polymérisation d'une composition de revêtement résistant à l'abrasion selon l'une quelconque des revendications 1 à 10.

12. Élément optique selon la revendication 11, l'élément optique étant formé à partir d'un polymère thermodurcissable.

13. Élément optique selon la revendication 12, dans lequel le polymère thermodurcissable est choisi parmi un ou plusieurs du groupe constitué par : un polymère de bis(carbonate d'allyle) de diéthylèneglycol, un polymère d'acrylate, un polymère de thiolène, un polymère d'uréthane, un polymère de thiouréthane et un polymère de thioépoxyde.

14. Élément optique selon la revendication 11, l'élément optique étant formé à partir d'un polymère thermoplastique.

15. Élément optique selon la revendication 14, dans lequel le polymère thermoplastique est choisi parmi un ou plusieurs du groupe constitué par : un polymère de bisphénol A de type polycarbonate et un polyamide.

16. Élément optique selon l'une quelconque des revendications 11 à 15, dans lequel lorsqu'un verre en bis(carbonate d'allyle) de diéthylèneglycol non revêtu et l'élément optique sont soumis à un test d'abrasion de Bayer, un rapport du trouble développé pour le verre non revêtu au trouble développé pour l'élément optique est de 1,0-1,5 ou plus.

17. Élément optique selon l'une quelconque des revendications 11 à 16, dans lequel lorsqu'un verre en bis(carbonate d'allyle) de diéthylèneglycol non revêtu et l'élément optique sont soumis à un test d'abrasion à la paille de fer, un rapport du trouble développé pour le verre non revêtu au trouble développé pour l'élément optique est de 1,5-2,5 ou plus.

18. Élément optique selon l'une quelconque des revendications 11 à 17, l'élément optique étant un verre ophtalmique.

19. Élément optique selon l'une quelconque des revendications 11 à 18, dans lequel le revêtement résistant à l'abrasion est formé directement sur la surface de l'élément optique.

20. Procédé de formation d'un revêtement résistant à l'abrasion sur une surface d'un élément optique, le procédé comprenant :
- l'utilisation d'un élément optique ayant une surface à revêtir ;
- le revêtement d'une surface de l'élément optique avec une composition de revêtement selon l'une quelconque des revendications 1 à 10 ; et
- la polymérisation ionique de la composition de revêtement pour former le revêtement résistant à l'abrasion sur la surface de l'élément optique.

21. Procédé de formation d'un revêtement résistant à l'abrasion selon la revendication 20, dans lequel l'élément optique est formé à partir d'un polymère thermodurcissable.

22. Procédé de formation d'un revêtement résistant à l'abrasion selon la revendication 21, dans lequel le polymère thermodurcissable est choisi parmi un ou plusieurs du groupe constitué par : un polymère de bis(carbonate d'allyle) de diéthylèneglycol, un polymère d'acrylate, un polymère de thiolène, un polymère d'uréthane et un polymère de thiouréthane.

23. Procédé de formation d'un revêtement résistant à l'abrasion selon la revendication 20, dans lequel l'élément optique est formé à partir d'un polymère thermoplastique.

24. Procédé de formation d'un revêtement résistant à l'abrasion selon la revendication 23, dans lequel le polymère thermoplastique est choisi parmi un ou plusieurs du groupe constitué par : un polymère de bisphénol A de type polycarbonate et un polyamide.

25. Procédé de formation d'un revêtement résistant à l'abrasion selon l'une quelconque des revendications 20 à 24, dans lequel l'étape de revêtement de l'élément optique comprend l'application de la composition de revêtement directement sur la surface de l'élément optique.

26. Procédé de formation d'un revêtement résistant à l'abrasion selon l'une quelconque des revendications 20 à 25, dans lequel l'étape de polymérisation de la composition de revêtement comprend une étape d'exposition de la composition de revêtement à de la lumière UV.

27. Procédé de formation d'un revêtement résistant à l'abrasion selon la revendication 26, dans lequel la composition de revêtement est exposée à de la lumière UV pendant une durée de 5 à 60 secondes à une dose supérieure à environ 5 Jcm⁻² avec une intensité maximale supérieure à environ 0,5 Wcm⁻².

28. Procédé de formation d'un revêtement résistant à l'abrasion selon l'une quelconque des revendications 20 à 27, dans lequel l'élément optique est un verre ophtalmique.

29. Procédé de formation d'un revêtement résistant à l'abrasion sur une surface d'un élément optique, le procédé comprenant :
- le revêtement d'une surface d'une section d'un moule utilisé pour fabriquer l'élément optique avec une composition de revêtement selon l'une quelconque des revendications 1 à 10 ;
- la polymérisation ionique au moins partielle de la composition de revêtement ;
- l'assemblage d'un moule contenant la section de moule ;
- le remplissage du moule avec une composition à couler polymère réticulable ; et
- la polymérisation de la composition à couler de manière à former l'élément optique portant le revêtement résistant à l'abrasion sur une surface.
